# EUROPEAN PATENT SPECIFICATION

(11) **EP 2 154 516 B1**
(45) Date of publication and mention of the grant of the patent: **12.03.2014**
(21) Application number: 09166941.6
(22) Date of filing: 31.07.2009
(51) Int. Cl.: G01N 23/08, G01N 21/88, G01V 5/00

(54) **Method and apparatus for analysing an object**
Verfahren und Vorrichtung zur Analyse eines Objekts
Procédé et appareil pour analyser un objet

(30) Priority: 01.08.2008 IT MI20081442
(43) Date of publication of application: 17.02.2010
(73) Proprietor: Fondazione Bruno Kessler, 38122 Trento (IT); Art-Test di Luciano Marras & C.sas, 56121 Pisa (PI) (IT)
(72) Inventor: Gregori, Paolo, 38122 TRENTO (IT); Remondino, Fabio, 21056 INDUNO OLONA (IT); Zorzi, Nicola, 38046 LAVARONE (IT); Boscardin, Maurizio, 38068 ROVERETO (IT); Perenzoni, Matteo, 38068 ROVERETO (IT); Pelagotti, Anna, 50123 FIRENZE (IT); Marras, Luciano, 56121 PISA (IT)
(74) Representative: Borsano, Corrado

(56) References cited:
- US-A- 6 050 724
- US-A1- 2002 067 793
- HEITZ F ET AL: "Event detection in multisource imaging using contextual estimation" 19890523; 19890523 - 19890526, 23 May 1989 (1989-05-23), pages 1647-1650, XP010082905
- ANGLOS DEMETRIOS ET AL: "Laser Spectroscopic and Optical Imaging Techniques in Chemical and Structural Diagnostics of Painted ARTWORK" AMERICAN LABORATORY, INTERNATIONAL SCIENTIFIC COMMUNICATIONS, INC, US, vol. 31, no. 20, 20 October 1999 (1999-10-20), pages 60-67, XP002175236 ISSN: 0044-7749
- PELAGOTTI A ET AL: "Active and passive sensors for art works analysis and investigations" PROCEEDINGS OF THE SPIE - THE INTERNATIONAL SOCIETY FOR OPTICAL ENGINEERING, SPIE, US, vol. 6491, 29 January 2007 (2007-01-29), pages 64910R-1, XP002503598
- MILIANI C ET AL: "Non-invasive in-situ investigations versus micro-sampling: a comparative study on a Renoirs painting" APPLIED PHYSICS A; MATERIALS SCIENCE & PROCESSING, SPRINGER, BERLIN, DE, vol. 89, no. 4, 1 September 2007 (2007-09-01), pages 849-856, XP019561955 ISSN: 1432-0630
- ADRIAENS ET AL: "Non-destructive analysis and testing of museum objects: An overview of 5 years of research" SPECTROCHIMICA ACTA. PART B: ATOMIC SPECTROSCOPY, NEW YORK, NY, US, US, vol. 60, no. 12, 1 December 2005 (2005-12-01), pages 1503-1516, XP005210475 ISSN: 0584-8547

## Description

### Field of the invention

The present invention relates to an analysis method and apparatus, in particular for valuable objects having a predominantly bi-dimensional development, such as, for example, paintings, boards, doors, cabinet doors, lids, bas-reliefs and the like.

### Prior art

Various systems based on using different types of radiations have been developed in the field of the analysis of objects of various types, in particular works of art. For example, in the field of painting analysis, e.g. for research or restoration purposes, methods based on the reflection of electromagnetic waves (photography), e.g. in the visible, infrared and ultraviolet spectrum, have been developed. Images on photographic film are commonly obtained, although digital photography techniques are also applied.

Radiographic techniques, i.e. techniques based on radiations capable of crossing the materials to be analyzed, are also used in the field of the analysis of objects such as works of art. X rays are commonly used. Radiographic film may be used for these techniques. A sensor array system may also be provided in order to operate with a digital technique. This type of analysis may also be used for objects, such as those identified above, having a substantially bi-dimensional development. A typical problem related to the above-mentioned types of analysis is the difficulty of having films of the desired size for large objects and, in the case of digital images, of having extended sensor arrays, which besides are very costly, in order to obtain the very high definitions required; moreover, constructing the apparatuses is not simple. The procedure of obtaining a series of partial images, which are then arranged side-by-side to obtain a total image, is often employed. This may occur with great difficulty thus leading to considerable inaccuracies (geometric distortions). Furthermore, it is worth noting that, especially in the case of images obtained with radiations other than visible light, it may be very difficult to associate the individual points of the image with a precise point of the body to be investigated or, similarly, with a point of an image obtained with visible light or even infrared or ultraviolet radiations. The above may restrain the application itself of these techniques, and is however a limit for the information quality which may be obtained.

Therefore, although analyzing objects is known, above all objects of artistic value, by means of different sources and detectors in the visible, X ray, UV spectrum, etc., the technical problem is to ensure a perfect superimposition of the images and the corresponding information obtained by means of said different technologies, considering that said objects are often large in size and may not be flat. Such a methodology is shown in US20020067793.

HEITZ ET AL: "Event detection in multisource imaging using contextual estimation", 23 May 1989, pages 1647-1650 further describes the analysis of paintings and artwork.

### Summary of the invention

The problems identified above are solved according to the present invention by a method of analyzing a body, wherein a first electromagnetic radiation crossing the body is detected by a first sensor and a second electromagnetic radiation reflected by the surface of the body is detected by a second sensor at one or more points of a series of points to be investigated, while said first and second sensors integrally move together with respect to the body.

Where, the term "point" indicates a portion of the body surface analyzed in a certain time by said at least first and second sensors. The size of said portion may be proportionate to the size, type and resolution of the sensors employed. Each of said sensors may have a preponderant acquisition size as compared to the others. According to a first preferred variant, said first and second sensors detect the radiation from the same acquisition point.

According to a second variant of said method, it may comprise a step of associating the information obtained by said sensors with each point of said series of points, when a same point is scanned by said sensors in different instants, e.g. when said first sensor detects a first radiation from a first point and said second sensor simultaneously detects a second radiation from a second point.

According to another aspect of the invention, said first and second sensors are adapted to move perpendicularly to a surface of the body to be investigated, the apparatus being adapted to record a focusing distance and to correlate it with the electric signals produced by said first and second sensors.

According to a preferred variant of the invention, the sensors of the two radiations are integrated in a single sensor sharing the same electric signal processing electronics. According to a preferred aspect, the sensor detections are transformed into digital data in which the detections related to the two radiations associated with a same investigated point remain reciprocally associated. These data may be stored on an appropriate storage medium.

According to an aspect of the invention, the first radiation are X rays, the second is visible, infrared or ultraviolet light, more preferably visible light. Several radiations may be used simultaneously by increasing the number of sensors and sources so as to combine different image types.

These integral movements substantially occur on a plane for scanning the whole body undergoing the analysis, while movements of the sensors or part thereof are possible, especially the sensors related to radiations adapted to be reflected, in a direction normal to the plane, in particular to focus on the surface of the body. According to a preferred aspect of the invention, in order to increase the speed of the aforesaid scanning, said adjacent sensors may be developed along a direction perpendicular to a side-by-side direction of the sensors which are sensitive to the various radiations, so as to simultaneously scan several points.

The invention also relates to an apparatus according to claim 10.

Simultaneously acquiring several spectrum components according to different wavelengths, possibly with a single mechanical movement, advantageously allows to reduce superimposition (recording) errors of the images obtained, for example, by means of X and visible and/or IR and/or UV radiation.

Integrating or approaching the sensors related to different electromagnetic radiations as more as possible advantageously allows to eliminate alignment errors and distortions due to the different focusing and/or collimation systems between the various sensors and sources, thus ensuring the simultaneous acquisition of the different electromagnetic sources in relation with a same point of the body.

It is a particular object of the present invention the content of the appended claims which form an integral part of the present description.

### Description of the drawing

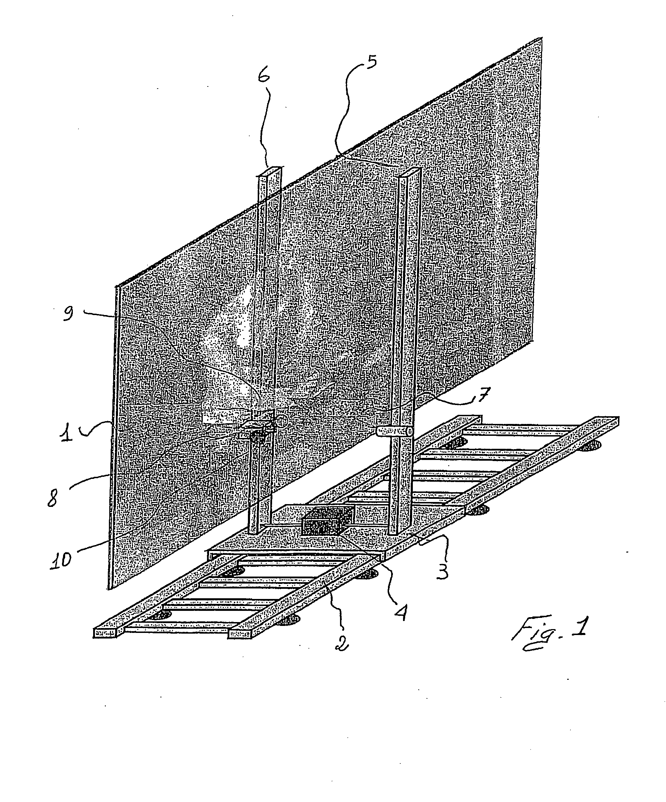

The present invention will now be disclosed by the detailed description of preferred but not exclusive embodiments, provided by way of example only, with the aid of accompanying figure 1, which diagrammatically shows an apparatus according to a preferred aspect of the invention.

### Detailed description of an embodiment

Figure 1 shows an apparatus adapted to analyze a body 1 having a predominantly bi-dimensional development. In the exemplified case, it may be a painting, the apparatus being particularly suitable for analyzing works of art, but it may be any other object, such as a board or a cabinet door, a lid or any other body for which associating an image obtained by reflection of visible light, for example, with an image obtained by a radiographic-type technique is useful. It is apparent that the described technique may be extended to other application fields in addition to those identified above, which are however the preferred fields of application. The apparatus comprises a supporting element 2, which may be rail-shaped, on which a carriage 3, which may be moved by the motor 4, e.g. an electric motor, is movable. Integral with the carriage are rear 5 and front 6 arms, arranged on the two sides with respect to the body 1, which is placed, according to a preferred aspect of the invention, on a plane parallel to the movement direction of carriage 3. Supported by supports moving along the arms, a source 7 of said first radiation, preferably an X ray source, slides on the rear arm 5, and a sensor of said first radiation aligned with the source slides on the front arm 6, so that the radiation beam crosses the body and is picked up by the sensor 8. The source 9, which may be a lamp of appropriate type, and the second radiation sensor 10, which may be mono- or polychrome visible light, infrared, or ultraviolet radiation slide on the front arm 6 integrally with sensor 8. Movement synchronicity ensures the alignment between source 7 and sensor 8. According to needs, apparatuses may be provided in which there is no supporting element and the supports are independently supported and differently synchronized, e.g. for analyzing voluminous bodies which are difficult to be handled. Alternatively, the supports may hang from a supporting element, such as a rail placed above the body to be analyzed. As mentioned, there may be several sources and/or sensors if the use of several types of radiation is intended, in particular different types of radiation adapted to be reflected by the body, e.g. infrared radiation and visible light may be used. According to the present invention, infrared or UV radiation, visible light and X radiation data are simultaneously acquired in a single pass.

Source 9 may also be omitted if visible light is used and the illumination is sufficient, but having an appropriate light source to illuminate the concerned area is however preferable. The second radiation sensor 10 preferably pointed so as to receive the radiation reflected from the point of the surface of body 1, facing the sensor itself and crossed by the beam of the first radiation, so that the points analyzed with different radiations coincide.

According to a second variant of the apparatus, the transmitted radiation sensor is expected to pick up the radiation of a first point and the reflected radiation sensor is expected to pick up the radiation of a second point at a known distance from said first point so as to be able to correlate the information concerning a same point as the front arm 6 moves along a scanning direction.

The sensors of two radiation types (reflected and transmitted) according to the present invention are preferably integrated in a single device in order to obtain the maximum coincidence of the points concerned by the various radiations. The sensors may comprise suitable optical collimation and focusing systems. According to the invention, the radiation sensors may move along an axis orthogonal to the plane identified by the movement direction of the sensors and sources as described above, along which the scanning is carried out. This axis is substantially the detection axis of the sensor itself. This allows to focus on the surface at the point to be analyzed, and may simultaneously allow to obtain data related to the distance of the body surface from the sensor.

The data related to said distances may be stored along with the images so as to obtain more complete information on the shape of the body, in particular when the surface exposed to the sensors is not flat and has protrusions, recesses or undulations. Such a solution is even more advantageous when sources and corresponding sensors of reflected electromagnetic radiations, such as visible light, infrared (IR) or ultraviolet (UV) radiation are simultaneously employed. Therefore, according to the present invention, the visible light-sensitive sensor allows to:
- focus on the scanning point for acquiring in the visible field and in the ultraviolet and/or infrared field by means of a movement perpendicular to the surface to be analyzed, with a consequent improved scanning of non-flat bodies,
- for each point, correlate the obtained information on the electromagnetic radiations employed with the focusing distance and thus the shape of the object.

Other solutions, different from those illustrated, are however possible, e.g. integral sensors oriented parallel to one another. Or sensors in other spectral bands, or reactive to other types of incident signal, such as ultrasounds for example. The distance between the analyzed points is however constant and a processing system of the data picked up by the sensors may compensated for such a difference. Or adjustable sensors and/or pointing systems to allow the correct orientation of the sensors may be provided.

A computer is preferably part of the apparatus for processing the obtained data and appropriately combine them. Data may be thus stored by said computer.

The computer may control, even by means of appropriate software, the synchronized movement of source and sensors by wired systems or even remote control systems.

An embodiment is shown by way of example, in which the transmitted radiation sensor is placed on the same side as the sensor and source of the second radiation, which may be a radiation in the visible or IR or UV spectrum, while the first radiation source is on the opposite side. If deemed appropriate, the position of the source and first radiation sensor may be exchanged, since the first radiation is intended to cross the body being investigated.

The apparatus may be constructed in other manners than that shown. For example, telescopic or articulated arms, which form the front and rear movable supports, may be used providing that the alignment between source and sensor is ensured, by virtue of the integral or anyway synchronous movement. Embodiments, such as the one shown, which permit to scan according to orthogonal axes and allow to immediately store the points of the image in a matrix in which said points are associated with Cartesian coordinates, are particularly useful. The apparatus may comprise supporting devices for positioning and withholding the body to be analyzed in the appropriate position.

Sensors and sources may be of known type.

Photodiodes, phototransistors or photomultipliers may be used for visible light. For the infrared spectrum, an example are InGaAs or Ge sensors; for example, an array of eight sensors of this type has been deemed adequate.

The visible light sensor may be monolithically integrated on CMOS chips along with the reading circuits (thus made of silicon) and may be provided for grayscale viewing or RGB components of light may be distinguished by means of color filters.

The X ray sensor may be made of silicon, often high resistivity silicon. The array thus obtained may be, as the infrared sensor, connected by means of bump-bonding or wire-bonding at the opposite free side of the CMOS chip. The chip - pixel-to-pixel sensor assembly allows to make a complex electronic component capable of discriminating the energy and the statistic of the detected photons, thus providing a further spectrum resolution within the X band for the obtained data, for each single acquisition and each observed point. Discriminating various energies indeed allows to recognize different materials within the investigated body.

According to a preferred variant of the invention, the use of at least one multi-spectrum sensor is preferred, i.e. a sensor capable of simultaneously detecting electromagnetic radiations, such as visible light, infrared radiation and X rays. Although monolithic integrated sensors adapted to detect radiations in the visible and infrared spectrums by means of CMOS technology are known, an integrated sensor adapted to detect visible light, infrared and X radiations form an integral part of the present invention.

The use of materials such as high resistivity silicon is preferred for making the multi-spectrum sensor, with a thickness in the sensitive region of the order of hundreds of micrometers, or however at least a size order thicker than the sensitive region which is used in typical microelectronic processes (a few micrometers), or gallium arsenide, cadmium telluride or other composite semiconductors.

With the electronic processing part thereof, the CMOS sensor, in addition to being sensitive to visible radiation, is able to process the signals received from IR and X sensors.

According to a first variant of the sensor, a first part sensitive to the IR radiation is attached to a CMOS sensor, while an X radiation sensor is placed close to the CMOS and connected by wire-bonding to the processing electronics thereof.

The connection between the IR sensor and the CMOS and between the X ray sensor and the CMOS may be made by wire bonding or bump bonding.

According to a further variant, the CMOS and IR sensors are made in a single body using a single electronic processing section as shown above.

By using a standard CMOS, a single output channel proportional to the total detected light intensity may advantageously be obtained, while 3 or 4 channels need to be processed if imaging sensors with color filters are used. In both cases, there is one extra channel dedicated to the IR sensor signals.

According to the present invention, arrays of 3xN sensors of the above-mentioned three types or multiples thereof may be used.

The X radiation sensor may comprise collimation systems so as not to require a specific focusing as compared to that made for the visible and/or infrared and/or ultraviolet radiation.

The radiation source may consist of one or more tubes so as to increase the spectral content of the emission. Normally, the tubes may be monochromatic (they emit at a certain energy) but also have secondary emission peaks: these may be exploited for an energy analysis as mentioned above.

The X ray tubes may have collimation systems capable of obtaining a radiation beam which does not require any further focusing. For example, the result may be obtained by means of a metal shielding appropriately dimensioned according to the geometric features of the system.

If deemed appropriate, the various sensors may be provided with filtering means to improve sensitivity of the single bands.

The described technique is particularly useful because it allows to associate the images obtained with various techniques in a point-by-point fashion, so as to have a precise reference for the images, e.g. radiographic images, with respect to the body image obtained with visible radiation; this obviously also applies to other techniques, such as the infrared or ultraviolet techniques, providing very accurate information.

A further resulting advantage is indeed the possibility of operating with single sensors or arrays with a small number of sensors for a complete analysis. Longer scanning times are certainly acceptable in the field of application of analyses on unanimated objects and are widely compensated by the aforesaid advantages.

The features described in the present invention may be combined with one another, moreover without departing from the scope of the invention itself.

## Claims

1. A method of analyzing a body, wherein a first electromagnetic radiation crossing the body is detected by a first sensor (8) and a second electromagnetic radiation reflected by the body is detected by a second sensor (10) at one or more points of a series of points to be investigated, while said first and second sensors integrally move together with respect to the body, said first (8) and second (10) sensors are adapted to move perpendicularly to a surface of the body to be investigated, the second sensor (10) comprising focusing means for focusing on said one or more points, the method being **characterized in that** it comprises the steps of
- calculating a distance of said one or more points of the body surface from the second sensor (10),
- storing said distance along with images obtained by means of said first (8) and second sensor (10),
so as to obtain information on the shape of the body.

2. A method according to claim 1, wherein said first and second radiations are simultaneously detected; said first and second sensors detecting electromagnetic radiations either from a same point or from points located at a known distance.

3. A method according to claim 2, wherein said simultaneous detection is obtained by means of a single sensor which is sensitive to both radiations.

4. A method according to claim 1, further comprising a step of associating the information obtained from said sensors with each point of said series of points when a same point is scanned by said sensors at different instants.

5. A method according to any one of the preceding claims, wherein said first radiation are X rays and said second radiation is visible and/or infrared and/or ultraviolet light.

6. A method according to claim 5, wherein at least two radiations adapted to be reflected are used.

7. A method according to claim 5, wherein a body focusing distance is in relation with the detection of at least said first and second electromagnetic radiations for characterizing non-flat bodies.

8. A method according to claim 6, wherein a focusing distance is in relation with said at least two electromagnetic radiations adapted to be reflected and/or with said first electromagnetic radiation.

9. A method according to any one of the preceding claims, wherein the analysis comprises scanning a series of points in sequence, preferably covering all the points of at least one portion of a body surface.

10. An apparatus for analyzing a body (1), comprising a first sensor (8) of a first radiation crossing the body, a second sensor (10) of a second radiation reflected by the body **characterized in that** said first and second sensors are integral with each other and adapted to recapture the body to be investigated, said first (8) and second (10) sensors are adapted to move perpendicularly to a surface of the body to be investigated, the second sensor (10) comprising focusing means for focusing on a point of the surface of the body, **characterized in that** it comprises
- means for calculating a distance of said one or more points of the body surface from the sensor (10),
- means for storing said distance along with images obtained by means of said first (8) and second sensor (10),
so as to obtain information on the shape of the body.

11. An apparatus according to claim 10, wherein said first (8) and second (10) sensors are adapted to move perpendicularly to a surface of the body to be investigated; the apparatus being adapted to record a focusing distance and correlate it with the electric signals produced by said first and second sensors.

12. An apparatus according to claim 11, wherein said first sensor is adapted to detect an electromagnetic X radiation and said second sensor is adapted to detect a visible and/or IR or UV radiation.

13. An apparatus according to claim 12, wherein said first and second sensors are integrated in a single sensor wherein an IR radiation-sensitive layer and a visible radiation-sensitive layer share the same electric signal processing electronics.

14. An apparatus according to claim 12, comprising a movable front support (6) and a movable rear support (5), adapted to synchronously move together and to be placed on two opposite sides of the body to be investigated and comprising an X electromagnetic radiation source (7) placed on one of said supports and said first sensor (8) being placed on the other of said supports and comprising a source of visible and/or IR or UV radiation on said second of said supports.

## Patentansprüche

1. Verfahren zum Analysieren eines Körpers, wobei eine erste elektromagnetische Strahlung, die den Körper durchquert, von einem ersten Sensor (8) detektiert wird und eine zweite elektromagnetische Strahlung, die von dem Körper reflektiert wird, von einem zweiten Sensor (10) detektiert wird, und zwar an einem oder mehreren Punkten einer Reihe von zu untersuchenden Punkten, während der erste und zweite Sensor sich einteilig gemeinsam in Bezug auf den Körper bewegen, wobei der erste (8) und zweite (10) Sensor derart angepasst sind, sich rechtwinklig zu einer Fläche des zu untersuchenden Körpers zu bewegen, wobei der zweite Sensor (10) ein Fokussiermittel zum Fokussieren auf den einen oder die mehreren Punkte umfasst, wobei das Verfahren **dadurch gekennzeichnet ist, dass** es die Schritte umfasst:
- Berechnen einer Distanz des einen oder der mehreren Punkte der Körperfläche von dem zweiten Sensor (10),
- Speichern der Distanz zusammen mit Bildern, die mittels des ersten (8) und zweiten Sensors (10) erhalten werden,
um so Information über die Form des Körpers zu erhalten.

2. Verfahren nach Anspruch 1, wobei die erste und zweite Strahlung simultan detektiert werden; wobei der erste und zweite Sensor elektromagnetische Strahlungen entweder von einem selben Punkt oder von Punkten, die unter einer bekannten Distanz angeordnet sind, detektieren.

3. Verfahren nach Anspruch 2, wobei die simultane Detektion mittels eines einzelnen Sensors erhalten wird, der für beide Strahlungen empfindlich ist.

4. Verfahren nach Anspruch 1, ferner mit einem Schritt zum Zuordnen der Information, die von den Sensoren erhalten wird, zu jedem Punkt der Reihe von Punkten, wenn ein selber Punkt von den Sensoren zu verschiedenen Zeitpunkten abgetastet wird.

5. Verfahren nach einem der vorhergehenden Ansprüche, wobei die erste Strahlung Röntgenstrahlen sind und die zweite Strahlung sichtbares und/oder infrarotes und/oder ultraviolettes Licht ist.

6. Verfahren nach Anspruch 5, wobei zumindest zwei Strahlungen, die zur Reflexion angepasst sind, verwendet werden.

7. Verfahren nach Anspruch 5, wobei eine Körperfokussierdistanz in Bezug zu der Detektion von zumindest der ersten und zweiten elektromagnetischen Strahlung zur Kennzeichnung nicht flacher Körper steht.

8. Verfahren nach Anspruch 6, wobei eine Fokussierdistanz in Bezug zu den zumindest zwei elektromagnetischen Strahlungen, die zur Reflexion angepasst sind, und/oder zu der ersten elektromagnetischen Strahlung steht.

9. Verfahren nach einem der vorhergehenden Ansprüche, wobei die Analyse ein Abtasten einer Reihe von Punkten in Folge umfasst, wobei bevorzugt alle Punkte von zumindest einem Abschnitt einer Körperfläche abgedeckt werden.

10. Vorrichtung zum Analysieren eines Körpers (1), mit einem ersten Sensor (8) für eine erste Strahlung, die den Körper durchquert, einem zweiten Sensor (10) für eine zweite Strahlung, die von dem Körper reflektiert wird, **dadurch gekennzeichnet, dass** der erste und zweite Sensor einteilig zueinander und derart angepasst sind, den zu untersuchenden Körper rückzugewinnen, wobei der erste (8) und zweite (10) Sensor derart angepasst sind, sich rechtwinklig zu einer Fläche des zu untersuchenden Körpers zu bewegen, wobei der zweite Sensor (10) ein Fokussiermittel zum Fokussieren auf einen Punkt der Fläche des Körpers umfasst, **dadurch gekennzeichnet, dass** sie umfasst:
- ein Mittel zum Berechnen einer Distanz des einen oder der mehreren Punkte der Körperfläche von dem Sensor (10),
- ein Mittel zum Speichern der Distanz zusammen mit Bildern, die mittels des ersten (8) und zweiten Sensors (10) erhalten werden,
um so Information über die Form des Körpers zu erhalten.

11. Vorrichtung nach Anspruch 10, wobei der erste (8) und zweite (10) Sensor derart angepasst sind, sich rechtwinklig zu einer Fläche des zu untersuchenden Körpers zu bewegen; wobei die Vorrichtung derart angepasst ist, eine Fokussierdistanz aufzuzeichnen und diese mit den elektrischen Signalen, die von dem ersten und zweiten Sensor erzeugt werden, zu korrelieren.

12. Vorrichtung nach Anspruch 11, wobei der erste Sensor derart angepasst ist, eine elektromagnetische Röntgenstrahlung zu detektieren, und der zweite Sensor derart angepasst ist, eine sichtbare und/oder IR- und/oder UV-Strahlung zu detektieren.

13. Vorrichtung nach Anspruch 12, wobei der erste und zweite Sensor in einen einzelnen Sensor integriert sind, wobei sich eine für IR-Strahlung empfindliche Schicht und eine für sichtbare Strahlung empfindliche Schicht dieselbe Elektronik zur Verarbeitung elektrischer Signale teilen.

14. Vorrichtung nach Anspruch 12, mit einem beweglichen vorderen Träger (6) und einem beweglichen rückwärtigen Träger (5), die derart angepasst sind, sich synchron gemeinsam zu bewegen und an zwei gegenüberliegenden Seiten des zu untersuchenden Körpers angeordnet zu werden, und mit einer Quelle (7) für elektromagnetische Röntgenstrahlung, die an einem der Träger angeordnet ist, und wobei der erste Sensor (8) an dem anderen der Träger angeordnet ist, und mit einer Quelle für sichtbare und/oder IR- oder UV-Strahlung an dem zweiten der Träger.

## Revendications

1. Procédé d'analyse d'un corps, dans lequel un premier rayonnement électromagnétique traversant le corps est détecté par un premier capteur (8) et un deuxième rayonnement électromagnétique réfléchi par le corps est détecté par un deuxième capteur (10) au niveau d'un ou plusieurs points d'une série de points à examiner, alors que lesdits premier et deuxième capteurs se déplacent conjointement solidairement par rapport au corps, lesdits premier (8) et deuxième (10) capteurs sont adaptés pour se déplacer perpendiculairement à une surface du corps à examiner, le deuxième capteur (10) comprenant des moyens de focalisation pour focaliser sur lesdits un ou plusieurs points, le procédé étant **caractérisé en ce qu'**il comprend les étapes suivantes :
- calcul d'une distance desdits un ou plusieurs points de la surface du corps par rapport au deuxième capteur (10),
- stockage de ladite distance conjointement à des images obtenues au moyen desdits premier (8) et deuxième (10) capteurs,
de manière à obtenir des informations sur le profil du corps.

2. Procédé selon la revendication 1, dans lequel lesdits premier et deuxième rayonnements sont détectés simultanément ; lesdits premier et deuxième capteurs détectant des rayonnements électromagnétiques à partir d'un même point ou à partir de points situés à une distance connue.

3. Procédé selon la revendication 2, dans lequel ladite détection simultanée est obtenue au moyen d'un unique capteur qui est sensible aux deux rayonnements.

4. Procédé selon la revendication 1, comprenant en outre une étape d'association des informations obtenues à partir desdits capteurs avec chaque point de ladite série de points quand un même point est balayé par lesdits capteurs à des instants différents.

5. Procédé selon l'une quelconque des revendications précédentes, dans lequel ledit premier rayonnement est des rayons X et ledit deuxième rayonnement est une lumière visible et/ou infrarouge et/ou ultraviolette.

6. Procédé selon la revendication 5, dans lequel au moins deux rayonnements adaptés pour être réfléchis sont utilisés.

7. Procédé selon la revendication 5, dans lequel une distance de focalisation du corps est en relation avec la détection d'au moins lesdits premier et deuxième rayonnements électromagnétiques pour la caractérisation de corps non plats.

8. Procédé selon la revendication 6, dans lequel une distance de focalisation est en relation avec lesdits au moins deux rayonnements électromagnétiques adaptés pour être réfléchis et/ou avec ledit premier rayonnement électromagnétique.

9. Procédé selon l'une quelconque des revendications précédentes, dans lequel l'analyse comprend le balayage d'une série de points en séquence, de préférence couvrant tous les points d'au moins une portion d'une surface de corps.

10. Dispositif pour analyser un corps (1), comprenant un premier capteur (8) d'un premier rayonnement traversant le corps, un deuxième capteur (10) d'un deuxième rayonnement réfléchi par le corps, **caractérisé en ce que** lesdits premier et deuxième capteurs sont solidaires l'un de l'autre et adaptés pour recapturer le corps à examiner, lesdits premier (8) et deuxième (10) capteurs sont adaptés pour se déplacer perpendiculairement à une surface du corps à examiner, le deuxième capteur (10) comprenant des moyens de focalisation pour focaliser sur un point de la surface du corps, **caractérisé en ce qu'**il comprend :
- des moyens pour calculer une distance desdits un ou plusieurs points de la surface du corps par rapport au capteur (10),
- des moyens pour stocker ladite distance conjointement à des images obtenues au moyen desdits premier (8) et deuxième (10) capteurs,
de manière à obtenir des informations sur le profil du corps.

11. Dispositif selon la revendication 10, dans lequel lesdits premier (8) et deuxième (10) capteurs sont adaptés pour se déplacer perpendiculairement à une surface du corps à examiner ; le dispositif étant adapté pour enregistrer une distance de focalisation et la mettre en corrélation avec les signaux électriques produits par lesdits premier et deuxième capteurs.

12. Dispositif selon la revendication 11, dans lequel ledit premier capteur est adapté pour détecter un rayonnement électromagnétique de rayons X et ledit deuxième capteur est adapté pour détecter un rayonnement visible et/ou IR ou UV.

13. Dispositif selon la revendication 12, dans lequel les premier et deuxième capteurs sont intégrés dans un unique capteur dans lequel une couche sensible au rayonnement IR et une couche sensible au rayonnement visible partagent la même électronique de traitement de signaux électriques.

14. Dispositif selon la revendication 12, comprenant un support avant mobile (6) et un support arrière mobile (5), adaptés pour se déplacer conjointement en synchronisme et pour être placés sur deux côtés opposés du corps à examiner et comprenant une source de rayonnement électromagnétique de rayons X (7) placée sur un desdits supports et ledit premier capteur (8) étant placé sur l'autre desdits supports et comprenant une source de rayonnement visible et/ou IR ou UV sur ledit deuxième desdits supports.
